(19) Europäisches Patentamt
European Patent Office
Office européen des brevets

(11) **EP 3 542 084 B1**

(12) **EUROPÄISCHE PATENTSCHRIFT**

(45) Veröffentlichungstag und Bekanntmachung des Hinweises auf die Patenterteilung:
**07.07.2021 Patentblatt 2021/27**

(21) Anmeldenummer: **17803891.5**

(22) Anmeldetag: **20.11.2017**

(51) Int Cl.:
**F16H 55/36** (2006.01)   **F16H 55/40** (2006.01)

(86) Internationale Anmeldenummer:
**PCT/EP2017/079808**

(87) Internationale Veröffentlichungsnummer:
**WO 2018/091712 (24.05.2018 Gazette 2018/21)**

(54) **SCHEIBE**

SHEAVE

POULIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.11.2016 DE 102016122366**

(43) Veröffentlichungstag der Anmeldung:
**25.09.2019 Patentblatt 2019/39**

(73) Patentinhaber: **Arntz Beteiligungs GmbH & Co. KG 37671 Höxter (DE)**

(72) Erfinder: **FRENZEL, André 53332 Bornheim (DE)**

(74) Vertreter: **Gramm, Lins & Partner Patent- und Rechtsanwälte PartGmbB Theodor-Heuss-Straße 1 38122 Braunschweig (DE)**

(56) Entgegenhaltungen:
**WO-A1-2016/160875      BE-A- 452 730
US-A- 5 368 525          US-A1- 2005 204 858**

**Beschreibung**

Die Erfindung betrifft eine Scheibe, insbesondere eine Treibscheibe, gemäß dem Oberbegriff von Anspruch 1.

Eine derartige Scheibe ist aus der WO 2016/160 875 A1 bekannt. Diese Scheibe besitzt bereits ein relativ günstiges Verhältnis zwischen Masse und maximal übertragbarem Drehmoment. Eine weitere Verbesserung dieses Verhältnisses ist jedoch wünschenswert.

Eine Scheibe in Form eines Kraftübertragungsrads ist zudem aus der DE 83 05 932 U1, der DE 698 07 533 T2 und der JP H04-331 857 A bekannt. Derartige Scheiben, insbesondere Treibscheiben, können auch als Räder bezeichnet werden und dienen beispielsweise dem Übertragen eines Drehmoments von einer Welle auf einen Treibriemen oder umgekehrt oder als Schwungscheibe. Es ist wünschenswert, dass derartige Scheiben möglichst leicht sind. Zudem ist es wünschenswert, dass solche Scheiben auch Schlägen, also kurzfristigen in axialer Richtung wirkenden Kräften, standhalten, ohne zu versagen. Häufig ist zudem gewünscht, dass derartige Scheiben ein hohes Trägheitsmodul bezüglich der Drehbewegung haben, nämlich dann, wenn solche Scheiben als Schwungscheiben eingesetzt werden.

Die aus der DE 698 07 533 T2 bekannte Scheibe besitzt zwar eine geringe Masse, ist aber anfällig gegen axiale Schläge. Zudem ist das maximale Drehmoment, das bei einer vorgegebenen Masse der Scheibe übertragen werden kann, vergleichsweise klein.

Der Erfindung liegt die Aufgabe zu Grunde, eine verbesserte Scheibe vorzuschlagen.

Die Erfindung löst das Problem durch eine Scheibe mit den Merkmalen von Anspruch 1. Erfindungsgemäß ist damit insbesondere eine gattungsgemäße Scheibe, bei der die Übertragungsstruktur drei, insbesondere genau drei, Stege aufweist, wobei zwischen zwei benachbarten Stegen je eine, insbesondere genau eine, Ausnehmung angeordnet ist, wobei jede Ausnehmung sich in einem Innen-Bereich entlang einer ersten Ellipse erstreckt, wobei jede erste Ellipse eine kleine Erstellipsen-Hauptachse hat und wobei die kleine Erstellipsen-Hauptachse durch die Nabe verläuft. Günstig ist es zudem, wenn jeder Steg eine, insbesondere genau eine, Aussparung besitzt, die sich im Innen-Bereich entlang einer zweiten Ellipse erstreckt, wobei jede zweite Ellipse eine große Zweitellipsen-Hauptachse hat und wobei die große Zweitellipsen-Hauptachse durch die Nabe verläuft.

Vorteilhaft an dieser Scheibe ist, dass sie ein besonders günstiges Verhältnis zwischen Masse und maximal übertragbarem Drehmoment bietet und robust in Bezug auf in axialer Richtung wirkende Schläge ist.

Im Rahmen der vorliegenden Beschreibung wird unter der Scheibe insbesondere ein Transmissionsrad verstanden, das zum Übertragen eines Drehmoments von der Nabe auf den Kranz ausgebildet ist, wobei der Kranz zum Zusammenwirken mit einem Riemen ausgebildet ist.

Alternativ ist die Scheibe eine Schwungscheibe. Erfindungsgemäß ist zudem ein Aggregat, das einen Motor, insbesondere einen Verbrennungsmotor oder einen Elektromotor, und eine erfindungsgemäße Scheibe aufweist, die mit dem Motor zum Antreiben durch den Motor verbunden ist.

Die Scheibe ist vorzugsweise einstückig ausgebildet. Einstückig bedeutet fügestellenfrei. In anderen Worten ist die Scheibe aus einem Block herausgearbeitet und/oder durch Urformen und/oder Umformen sowie gegebenenfalls spanendem Fertigen entstanden.

Günstig ist es, wenn der Kranz eine Keilnutenstruktur aufweist. In diesem Fall eignet sich die Scheibe als Transmissionsscheibe in einem Keilriementrieb.

Vorzugsweise hat der Kranz eine axiale Kranz-Breite, die zumindest das Fünffache, insbesondere zumindest das Sechsfache, einer axialen Steg-Stärke beträgt. Die Steg-Stärke ist die durchschnittliche Dicke des Stegs in axialer Richtung.

Unter dem Außenradius wird insbesondere der Radius des Hüllzylinders, der auch als Schmiegezylinder bezeichnet werden könnte, verstanden. Der Hüllzylinder ist der Zylinder minimalen Durchmessers, der den Kranz in Umfangsrichtung umgibt.

Unter einer Ellipse wird eine echte Ellipse verstanden. Eine echte Ellipse ist kein Kreis.

Unter der großen Hauptachse wird die längere der beiden Hauptachsen verstanden.

Unter dem Merkmal, dass die Ausnehmung sich entlang der ersten Ellipse erstreckt, wird insbesondere verstanden, dass der Rand des Stegs beziehungsweise der Ausnehmung im strengen Sinne durch einen Teil einer Ellipse beschrieben werden kann, es ist aber auch möglich, dass der Rand der Ausnehmung beziehungsweise des Steges von dieser idealen Ellipsenkurve abweicht, insbesondere um höchstens 2% des Außenradius.

Unter der Ausnehmung wird insbesondere ein Bereich verstanden, in dem die Materialstärke in axialer Richtung gemessen höchstens ein Drittel, insbesondere höchstens ein Fünftel, einer maximalen Materialstärke des Stegs beträgt. Die Ausnehmung kann in diesem Fall auch als Dünnungszone bezeichnet werden. Besonders bevorzugt ist im Bereich der Ausnehmung kein Material vorhanden. Es handelt sich dann um eine Ausnehmung im engeren Sinne. Das Gleiche gilt für die Aussparung in den Stegen.

Gemäß einer bevorzugten Ausführungsform erstreckt sich der Innen-Bereich, bei dem es sich um einen gedachten Bereich handelt, bis zum 0,5-fachen, vorzugsweise bis zum 0,6-fachen, besonders bevorzugt bis zum 0,8-fachen, des Außenradius. In anderen Worten ist der Innen-Bereich derjenige Teil der Scheibe, dessen Abstand zur Drehachse kleiner ist als der angegebene Bruchteil des Außenradius.

Es ist möglich, dass die Übertragungsstruktur mehr als drei Stege aufweist, beispielsweise vier, fünf oder sechs Stege.

Die erste Ellipse ist vorzugsweise so angeordnet, dass zumindest drei ihrer Scheitelpunkte einen Abstand von der Drehachse haben, der höchstens dem Außenradius entspricht.

Günstig ist es, wenn der Schwerpunkt der ersten Ellipse einen Abstand von der Drehachse hat, der höchstens das 0,5-fache, insbesondere höchstens das 0,8-fache des Außenradius beträgt.

Vorzugsweise erstreckt sich die Ausnehmung benachbart zum Kranz entlang eines Kreises, wobei ein Krümmungskreismittelpunkt im Bereich der Drehachse liegt. Hierunter ist insbesondere zu verstehen, dass es möglich, nicht aber notwendig ist, dass der Krümmungskreismittelpunkt direkt auf der Drehachse liegt. Insbesondere ist es möglich, dass der Abstand zwischen dem Krümmungskreismittelpunkt und der Drehachse kleiner ist als ein Zehntel, insbesondere kleiner als ein Zwanzigstel, des Außenradius. Alternativ oder zusätzlich erstreckt sich die Aussparung ebenfalls entlang eines Kreises, dessen Krümmungskreismittelpunkt im Bereich der Drehachse liegt. Vorzugsweise erstrecken sich die Ausnehmung und die Aussparung jeweils benachbart zum Kranz entlang des gleichen Kreises.

Vorzugsweise liegt ein Ausnehmungswinkel zwischen einer ersten Geraden, die durch die Drehachse und einen ersten Schwerpunkt der ersten Ellipse verläuft, und einer zweiten Geraden, die durch die Drehachse verläuft und die Ellipse tangiert, zumindest 34,5°, insbesondere zumindest 40° beträgt. Alternativ oder zusätzlich beträgt der Ausnehmungswinkel höchstens 42°. Die genannten Geraden verlaufen insbesondere senkrecht zur Drehachse. Es hat sich herausgestellt, dass Ausnehmungen dieser Größe zu Scheiben führen, bei denen die Tragfähigkeit bei einer fungierenden Masse besonders günstig ist.

Gemäß einer bevorzugten Ausführungsform beträgt ein Armbreitenwinkel, der gemessen wird zwischen der zweiten Geraden und einer dritten Geraden, die durch die Drehachse verläuft und die zweite Ellipse benachbart zur zweiten Geraden tangiert, zumindest 9°, insbesondere zumindest 9,7°. Alternativ oder zusätzlich beträgt der Armbreitenwinkel höchstens 12°, insbesondere höchstens 11°. Das führt zu einer besonders leichtgewichtigen Scheibe.

Günstig ist es, wenn ein Aussparungswinkel zwischen der dritten Geraden und einer vierten Geraden, die durch die Drehachsen und einen zweiten Schwerpunkt der zweiten Ellipse verläuft, zumindest 8°, insbesondere zumindest 8,5°, beträgt. Alternativ oder zusätzlich beträgt der Aussparungswinkel höchstens 12°, insbesondere höchstens 11°.

Günstig ist es, wenn die Übertragungsstruktur eine 360°-Drehsymmetrie aufweist, das führt zu einem besonders runden Lauf.

Vorzugsweise besitzt die Nabe eine Klemmbuchse oder einen Innspannsatz. Solche Scheiben sind besonders einfach zu montieren. Alternativ oder zusätzlich kann die Nabe eine Passfeder aufweisen, sodass eine formschlüssige Verbindung zwischen der Welle und der Nabe ausgeglichen werden kann. Unter einer Klemmbuchse wird insbesondere eine Taper-Lock-Buchse verstanden.

Günstig ist es, wenn die Ausnehmung zwischen dem Innen-Bereich, in dem sie sich entlang der ersten Ellipse erstreckt, und einem radial außerhalb des Innen-Bereichs liegenden Außen-Bereich einen Krümmungskreisradius hat, der höchstens dem minimalen Krümmungsradius der ersten Ellipse entspricht. Günstig ist es zudem, wenn dieser Krümmungskreisradius mindestens einem Drittel des minimalen Krümmungsradius der ersten Ellipse entspricht. So wird eine Kerbwirkung im Übergangsbereich vermieden.

Vorzugsweise ist die Scheibe zum Übertragen eines Drehmoments von zumindest 30 Kilonewtonmeter, insbesondere zumindest 60 Kilonewtonmeter, ausgebildet.

Erfindungsgemäß ist es zudem ein Zugmitteltrieb mit einer erfindungsgemäßen Scheibe und einem Riemen, der mit dem Kranz zum Antreiben mittels der Scheibe verbunden ist. Der Zugmitteltrieb besitzt vorzugsweise einen Motor zum Antreiben der Scheibe.

Die erfindungsgemäße Scheibe kann beispielsweise eine Schwungscheibe sein, beispielsweise für einen Kompressor, Brecher oder Motor. Die Scheibe kann zudem eine Keilriemenscheibe, eine Flachriemenscheibe, eine Rippenbandscheibe oder eine Zahnriemenscheibe sein.

Im Folgenden wird die Erfindung anhand der beigefügten Zeichnung näher erläutert. Dabei zeigt:

Figur 1    eine perspektivische Ansicht einer erfindungsgemäßen Scheibe,

Figur 2    einen Innspannsatz, der gemäß einer bevorzugten Ausführungsform Teil der Scheibe gemäß Figur 1 ist,

Figur 3    einen Querschnitt durch den Spannsatz gemäß Figur 2,

Figur 4a    einen Querschnitt durch die Drehachse der Scheibe gemäß Figur 1,

Figur 4b    einen Querschnitt entlang der Linie A-A der Scheibe gemäß Figur 4a,

Figur 5        einen ausschnittsweisen Querschnitt der Scheibe gemäß der Figuren 1 bis 4b,

Figur 6        einen ausschnittsweisen Querschnitt einer Scheibe gemäß einer zweiten Ausführungsform und

Figur 7        einen ausschnittsweisen Querschnitt einer Scheibe gemäß einer dritten Ausführungsform.

Figur 8        ist eine schematische Darstellung zur Erläuterung der Berechnung der Ellipsenparamter.

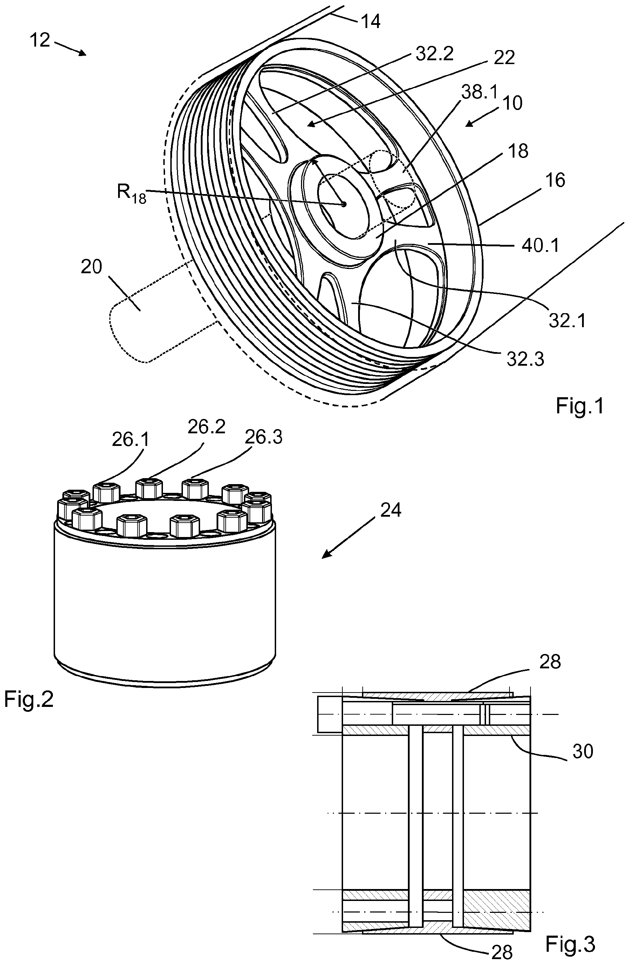

Figur 1 zeigt eine erfindungsgemäße Scheibe 10, die im vorliegenden Fall Teil eines erfindungsgemäßen Zugmitteltriebs 12 ist, der zusätzlich einen Riemen 14 aufweist. Der Riemen 14 ist teilweise transparent eingezeichnet, um die Scheibe 10 nicht zu verdecken. Der Riemen 14 wirkt mit einem Kranz 16 der Scheibe 10 formschlüssig zusammen. Der Zugmitteltrieb 12 umfasst zudem eine zweite, nicht eingezeichnete Scheibe, die ebenfalls mit dem Riemen 14 reibschlüssig verbunden ist, sodass mittels des Riemens 14 die Leistung von der Scheibe 10 auf die andere Scheibe übertragen werden kann. Des Weiteren weist der Zugmitteltrieb 12 einen nicht eingezeichneten Motor auf, der die Scheibe 10 antreibt.

Die Scheibe 10 besitzt eine Nabe 18, mittels der sie an einer schematisch eingezeichneten Welle 20 drehfest gelagert ist. Zwischen dem Kranz 16 und der Nabe 18 ist eine Übertragungsstruktur 22 angeordnet, die einen Drehmoment M von der Nabe 18 auf den Kranz 16 überträgt.

Die Figuren 2 und 3 zeigen einen Innenspannsatz 24, der in Montagestellung der Scheibe 10 (vergleiche Figur 1) reibschlüssig zwischen der Welle 20 und mit der Nabe 18 angeordnet ist und beide verbindet. Der Innenspannsatz 24 besitzt mehrere Spannschrauben 26.1, 26.2., ... sowie eine Außenhülse 28, deren Außendurchmesser durch Spannen der Spannschrauben 26.i (i = 1, 2, 3, ...) vergrößert werden kann. Beim Spannen der Spannschrauben 26.i verändert sich zudem ein Innendurchmesser einer Innenhülse 30, die in der Außenhülse 28 angeordnet ist. Auf diese Weise kann die Scheibe 10 fest reibschlüssig mit der Welle 20 verbunden werden.

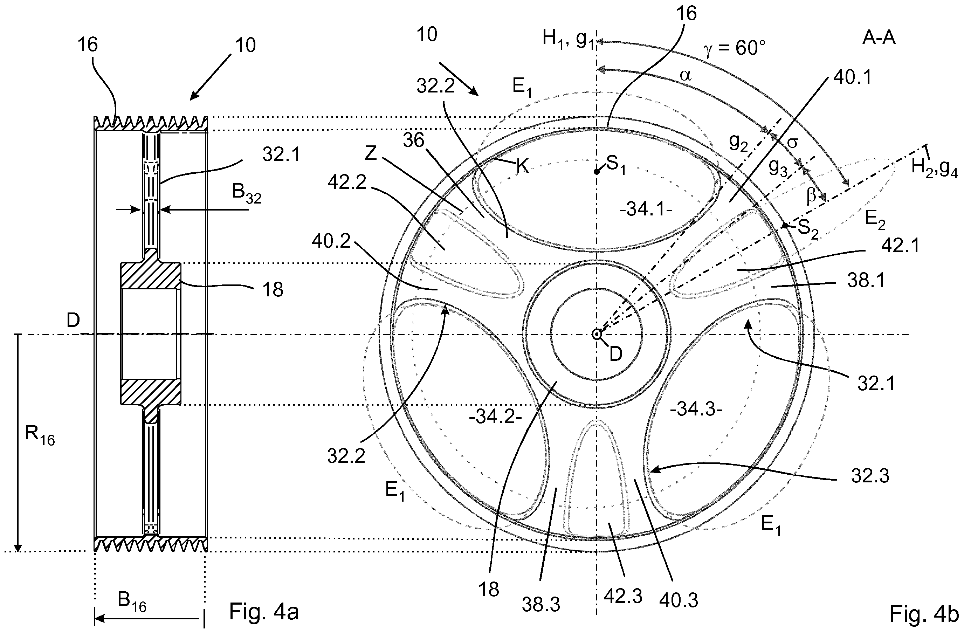

Figur 4a zeigt einen Querschnitt durch die Scheibe 10. Es ist zu erkennen, dass der Kranz 16 eine Keilnutstruktur aufweist. Eine Kranz-Breite $B_{16}$ ist deutlich größer als eine Steg-Stärke $B_{32}$ eines Stegs 32.1. Figur 4a zeigt zudem, dass die Scheibe 10 zum Drehen um eine Drehachse D ausgebildet ist.

Figur 4b zeigt eine Querschnittsansicht gemäß des Schnittes A-A durch die Scheibe 10. Es ist zu erkennen, dass die Übertragungsstruktur 22 durch genau drei Stege 32.1, 32.2, 32.3 gebildet ist. Zwischen jeweils zwei benachbarten Stegen liegt eine Ausnehmung 34. So liegt zwischen den Stegen 32.1 und 32.2 die Ausnehmung 34.1, zwischen den Stegen 32.2 und 32.3 die Ausnehmung 34.2 und zwischen den Stegen 32.3 und 32.1 die Ausnehmung 34.3. Da alle Ausnehmungen 34.1, 34.2, 34.3 im technischen Sinne gleich sind, wird im Folgenden lediglich von der Ausnehmung 34 gesprochen, wenn es um deren Eigenschaften geht. Darunter, dass die Ausnehmungen 34.1, 34.2, 34.3 im technischen Sinne gleich sind, wird verstanden, mit der es zwar möglich, nicht aber notwendig ist, dass sie im mathematischen Sinne identisch sind. Es ist vielmehr möglich und in der Regel fertigungstechnisch unvermeidbar, dass die Ausnehmungen voneinander leicht abweichen.

In einem Innen-Bereich 36, der sich innerhalb eines gedachten Zylinders Z befindet, verläuft die Ausnehmung 34, beispielsweise die Ausnehmung 34.1, entlang einer ersten Ellipse E1. Der Zylinder Z hat einen Radius, der dem 0,8-fachen eines Außenradius $R_{16}$ entspricht. In anderen Worten gilt $DZ = 0{,}8R_{16}$. Lediglich zur Verdeutlichung sei darauf hingewiesen, dass sich die Ausnehmung 34.1 damit auch im Bereich bis zum 0,5-fachen des Außenradius $R_{16}$ entlang der Ellipse E1 erstreckt.

Außerhalb des Innen-Bereichs 36 erstreckt sich die Ausnehmung 34 benachbart zum Kranz 16 entlang eines Kreises K. Der Krümmungsradius dieses Kreises K entspricht im Wesentlichen der Krümmung der Innenseite des Kranzes 16, insbesondere ist die Krümmung des Kreises K größer als der Außenradius $R_{16}$. Zwischen dem Abschnitt, in dem die Ausnehmung 34 ellipsenförmig behandelt ist, und dem Abschnitt, in dem die Ausnehmung kreisförmig behandelt ist, existiert ein Übergangsbereich. In diesem Bereich ist der Krümmungskreisradius kleiner als der Radius des Kreises K und ebenfalls kleiner als der minimale Krümmungskreisradius der Ellipse $E_1$ im Innen-Bereich 36.

Alle Stege 32.1, 32.2, 32.3 sind gleich aufgebaut. Der Steg 32.1, besitzt einen ersten Arm 38.1 und einen zweiten Arm 40.1. Beide Arme sind spiegelsymmetrisch zueinander aufgebaut. Die beiden Arme 38.1 und 40.1 werden dadurch gebildet, dass der Steg 32.1 eine Aussparung 42.1 aufweist. Die Aussparung 42.1 erstreckt sich im Innen-Bereich 36 entlang einer zweiten Ellipse $E_2$. Figur 4b zeigt, dass die kleine Erstellipsen-Hauptachse $H_1$ auf die Nabe 18 zu verläuft und im vorliegenden Fall durch die Drehachse D verläuft. Zudem verläuft die große Zweitellipsen-Hauptachse $H_2$ ebenfalls auf die Nabe zu und im vorliegenden Fall durch die Drehachse D.

Benachbart zum Kranz 16 verläuft auch die Aussparung 42 entlang des Kreises K. Zwischen dem Bereich, in dem sie entlang des Kreises K verläuft, und dem Bereich, in dem sie entlang der Zweiten Ellipse $E_2$ verläuft, existiert ein Zwischenbereich, in dem der Krümmungsradius kleiner ist als der Krümmungsradius des Kreises K und ebenfalls kleiner als die Krümmung der zweiten Ellipse in dem Bereich, der benachbart zum Übergangsbereich liegt.

Es ist zu erkennen, dass die Übertragungsstruktur 22 eine 60°-Drehsymmetrie aufweist. Das heißt, dass sich der Querschnitt bei einer Drehung um 60° um die Drehachse nicht ändert, da er auf sich selbst abgebildet wird.

Die Lagen der Ausnehmungen 34.j (j = 1, 2, 3) und der Aussparungen 42.j werden durch einen Ausnehmungswinkel a, einen Aussparungswinkel $\beta$ und einen Armbreitenwinkel $\sigma$ charakterisiert.

Der Ausnehmungswinkel $\alpha$ existiert zwischen einer ersten Geraden $g_1$ und einer zweiten Geraden $g_2$.

Die erste Gerade $g_1$ verläuft durch die Drehachse D und einen ersten Schwerpunkt $S_1$ der ersten Ellipse $E_1$.

Die zweite Gerade $g_2$ verläuft durch die Drehachse D und tangiert die erste Ellipse $E_1$.

Die dritte Gerade $g_3$ verläuft durch die Drehachse und tangiert die zweite Ellipse $E_2$ benachbart zur zweiten Geraden $g_2$.

Die vierte Gerade $g_4$ durch die Drehachse D und durch einen zweiten Schwerpunkt S der zweiten Ellipse $E_2$.

Für die in Figur 4b gezeigte Ausführungsform gelten die folgenden Winkel: $\alpha$= 40,5°, $\beta$= 9,5° und $\sigma$= 10°.

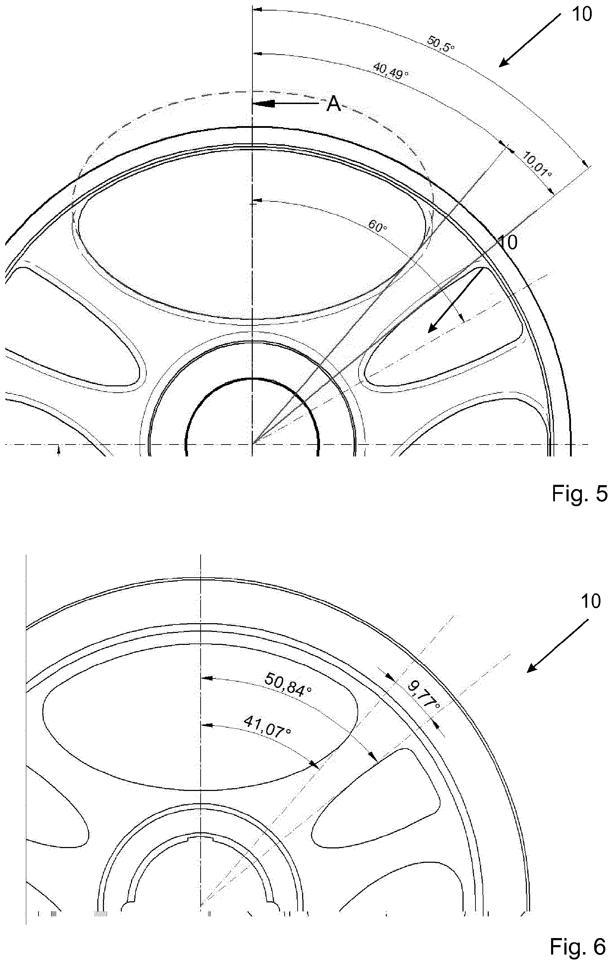

Figur 5 zeigt die genannten Winkel in einer Teilansicht der Scheibe 10.

Figur 6 zeigt eine zweite Ausführungsform einer erfindungsgemäßen Scheibe in einer Teil-Schnittansicht.

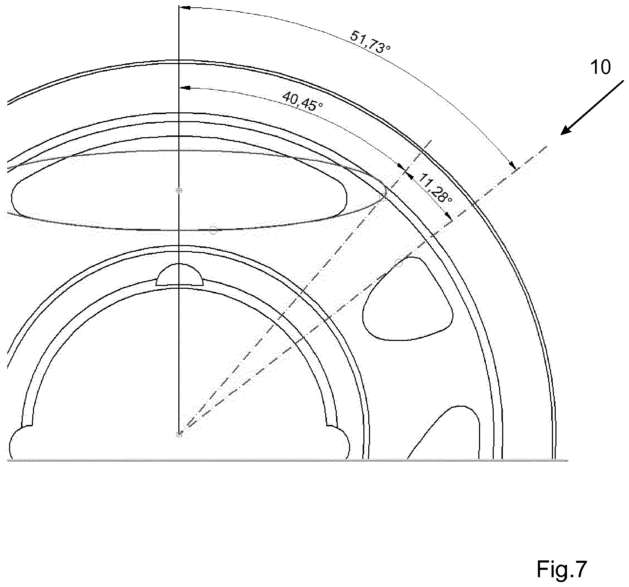

Figur 7 zeigt eine dritte Ausführungsform einer erfindungsgemäßen Scheibe 10 in einer Teil-Schnittansicht.

Die Scheibe 10, die in der oben gezeigten Ausführungsform als Transmissionsrad ausgebildet ist, ist einstückig ausgebildet. Sie wird beispielsweise aus Grauguss oder Sphäroguss hergestellt. Nach dem Guss werden die Nabe und/oder der Kranz spanend fein bearbeitet.

Im Folgenden wird beschrieben, wie im Rahmen eines erfindungsgemäßen Verfahrens die Ellipsen $E_1$ und $E_2$ gewählt werden können.

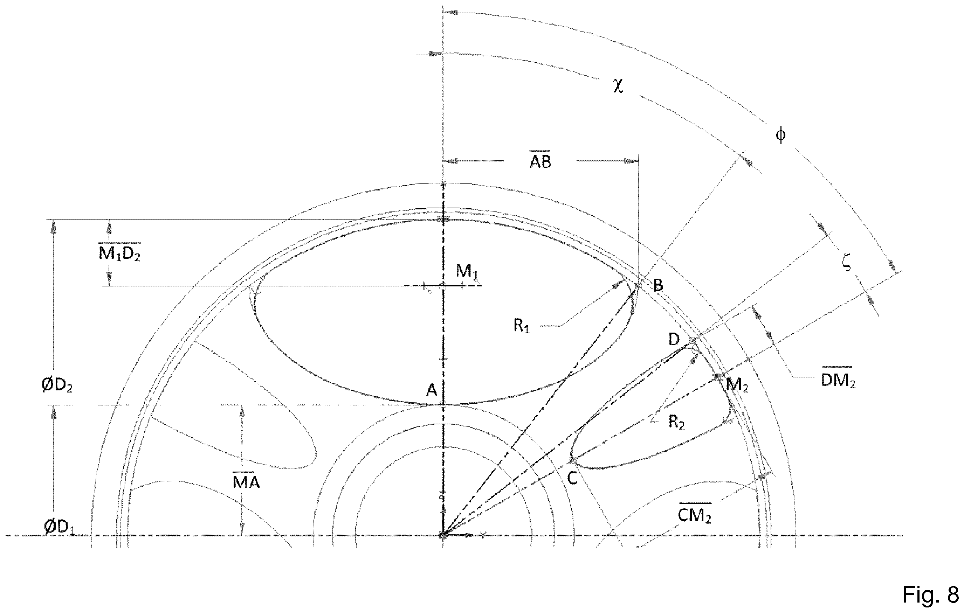

Figur 8 zeigt charakteristische Punkte sowie Parameter der Übertragungsstruktur. Dabei wurden die folgenden Bezeichnungen gewählt:

$D_1$- Innendurchmesser des zylindrischen Bereichs

$D_2$- Außendurchmesser des zylindrischen Bereichs

A- Scheitelpunkt der großen Ellipse

B- Schnittpunkt zwischen großer Ellipse und $D_2$

C- Scheitelpunkt der kleinen Ellipse

D- Schnittpunkt zwischen kleiner Ellipse und $D_2$

M- Mittelpunkt der Keilscheibe

$M_1$- Mittelpunkt der großen Ellipse

$M_2$- Mittelpunkt der kleinen Ellipse

$\phi$= 60°

$\chi$= 38°

$\varsigma$= 8°

$K_w$ - Winkelkorrektur (Die Spreizung der Doppelarme kann bei Bedarf verbreitert werden)

$K_1$ - Ellipsenkorrektur (Ellipse kann bei dünnen Armen nach außen verschoben werden)

**Streckendefinition**

$$\overline{AB} = \sin(\chi - K_w)\frac{D_2}{2}$$

$$\overline{M_1 D_2} = \frac{D_2}{2} \cdot (1 - \cos(\chi - K_w)) - K_1$$

$$\overline{MA} = \frac{D_1}{2} + K_1$$

$$\overline{DM_2} = \sin(\varsigma + \frac{K_w}{2}) \cdot \frac{D_2}{2}$$

$$\overline{CM_2} = \frac{D_2 - D_1}{2.225}$$

**Radiendefinition**

$$R_1 = \frac{(D_2 - D_1)}{2} \cdot 0{,}2097$$

$$R_2 = \frac{\overline{DM_2}}{3{,}2}$$

Die Kanten der Ausnehmungen sind - was eine bevorzugte Ausführungsform darstellt - abgerundet, vorzugsweise mit einem Radius, der einem Drittel der Scheibendicke entspricht.

Mit Bezug zu Figur 8 wird nun das Verfahren zur Auswahl der Ellipsenparameter beschrieben. Es werden zunächst der Außenradius $R_{16}$ und ein Naben-Außenradius $R_{18}$ (vgl. Figur 1) so festgelegt, dass die Nabe 18 ein vorgegebenes Drehmoment von der Welle 20 aufnehmen kann. Der Außenradius $R_{16}$ ist vorgegeben. Zudem ist ein Keilrillenprofil vorgegeben. Zudem ist die Kranzbreite $B_{16}$ vorgegeben und ergibt sich aus der Anzahl der für den Einsatz benötigten Riemen und deren Profil.

Der Außenradius $R_{16}$ und das Keilrillenprofil führen zum Wert K. Die gewählten Werte für den Naben-Außenradius $R_{18}$ und den Außenradius $R_{16}$ führen zu den Ellipsenschwerpunkten S1, S2 (vgl. Figur 4b) bzw. M1 und M2 (vgl. Figur 9) sowie zum Tangentenschnittpunkt A.

Es wird danach ein FEM-Modell der Scheibe unter Einbeziehung der folgenden Randbedingungen erstellt: Riemenzug (der sich aus dem vorgegebenen Riemenprofil, dem vorgegebenen Umschlingungswinkel und der vorgegebenen Riemenvorspannung ergibt), dem Nenndrehmoment (also der zu erwartenden Dauerlast), dem Maximaldrehmoment (also der zu erwartenden Drehmomentspitze über eine Zeit t, die von der Überlastsicherung eines Antriebs abhängen kann) und der Umfangsgeschwindigkeit (also dem resultierenden Bremsmoment aus Umfangsgeschwindigkeit und Massenträgheit bei einer Verzögerung über eine vorgegebene Bremszeit). Es ist möglich, nicht aber notwendig, dass zudem die Umgebungstemperatur, der Nabendruck und Achslasten mit einbezogen werden.

Die Korrekturfaktoren $K_w$ und $K_1$ sowie die Steg-Stärke werden iterativ so angepasst, dass die Masse der Scheibe möglichst klein wird und dennoch ein statistischer Festigkeitsnachweis gegen Bruch (maximal 99% statische Auslastung), sowie ein Ermüdungsfestigkeitsnachweis gegen Dauerbruch (maximal 92% zyklische Auslastung) nach FKM-Richtlinie (6. Auflage) erbracht wird.

**Bezugszeichenliste**

| | | | |
|---|---|---|---|
| | | D | Drehachse |
| 10 | Scheibe | Z | Zylinder |
| 12 | Zugmitteltrieb | $R_{16}$ | Außenradius |
| 14 | Riemen | $H_1$ | Erstellipsen-Hauptachse |
| 16 | Kranz | $H_2$ | Zweitellipsen-Hauptachse |
| 18 | Nabe | | |
| | | S | Schwerpunkt |
| 20 | Welle | g | Gerade |
| 22 | Übertragungsstruktur | | |
| 24 | Innenspannsatz | | |
| 26 | Spannschraube | | |
| 28 | Außenhülse | | |
| 30 | Innenhülse | | |
| 32 | Steg | | |
| 34 | Ausnehmung | | |
| 36 | Innen-Bereich | | |
| 38 | erster Arm | | |

(fortgesetzt)

| 40 | zweiter Arm |
| 42 | Aussparung |
| $\alpha$ | Ausnehmungswinkel |
| $\beta$ | Aussparungswinkel |
| $\sigma$ | Armbreitenwinkel |
| $E_1$ | erste Ellipse |
| $E_2$ | zweite Ellipse |
| M | Drehmoment |
| $B_{16}$ | Kranz-Breite |
| $B_{32}$ | Steg-Stärke |

**Patentansprüche**

1. Scheibe, insbesondere Treibscheibe, mit

   (a) einer Nabe (18),
   (b) einem Kranz (16), der einen Außenradius ($R_{16}$) hat, und
   (c) einer Übertragungsstruktur (22) zum Übertragen eines Drehmoments (M) von der Nabe (18) zum Kranz (16),
   (d) wobei die Scheibe (10) zum Drehen um eine Drehachse (D) ausgebildet ist,
   (e) wobei die Übertragungsstruktur (22)

      (i) drei Stege (32.1, 32.2, 32.3) aufweist,
      (ii) zwischen zwei benachbarten Stegen (32.2, 32.3) je eine Ausnehmung (34.1, 34.2, 34.3) aufweist,
      (iii) jede Ausnehmung (34) sich in einem Innen-Bereich (36) entlang einer ersten Ellipse ($E_1$) erstreckt,
      (iv) jede erste Ellipse ($E_1$) eine kleine Erstellipsen-Hauptachse ($H_1$) hat und
      (v) die kleine Erstellipsen-Hauptachse ($H_1$) durch die Nabe (18) verläuft, **dadurch gekennzeichnet, dass**

   (f) jeder der Stege

      (i) je eine Aussparung (42.1, 42.2, 42.3) besitzt, die sich im Innen-Bereich (36) entlang einer zweiten Ellipse ($E_2$) erstreckt,
      (ii) jede zweite Ellipse ($E_2$) eine große Zweitellipsen-Hauptachse ($H_2$) hat und
      (iii) die große Zweitellipsen-Hauptachse ($H_2$) durch die Nabe (18) verläuft.

2. Scheibe nach Anspruch 1, **dadurch gekennzeichnet, dass** sich der Innen-Bereich (36) bis zum 0,5-fachen des Außenradius ($R_{16}$) von der Drehachse (D) erstreckt.

3. Scheibe nach Anspruch 1, **dadurch gekennzeichnet, dass**

   - sich die Ausnehmungen (34.1, 34.2, 34.3) benachbart zum Kranz (16) entlang eines Kreises (K) erstrecken, wobei ein jeweiliger Krümmungskreismittelpunkt auf der Drehachse (D) liegt, und
   - sich die Aussparungen (42.1, 42.2, 42.3) benachbart zum Kranz (16) entlang des Kreises (K) erstrecken.

4. Scheibe nach einem der vorstehenden Ansprüche, **dadurch gekennzeichnet, dass** ein Ausnehmungswinkel ($\alpha$), der zwischen

   einer ersten Geraden ($g_1$), die durch die Drehachse (D) und einen ersten Schwerpunkt ($S_1$) der ersten Ellipse (E1) verläuft, und
   einer zweiten Geraden ($g_2$), die durch die Drehachse (D) verläuft und die erste Ellipse ($E_1$) tangiert,

   zumindest 40,4° beträgt und höchstens 42,1°, beträgt.

5. Scheibe nach einem der vorstehenden Ansprüche, **dadurch gekennzeichnet, dass** ein Armbreitenwinkel ($\sigma$) zwischen

der zweiten Geraden (g$_2$) und
einer dritten Geraden (g$_3$), die durch die Drehachse (D) verläuft und die zweite Ellipse (E$_2$) benachbart zur zweiten Geraden (g$_2$) tangiert,

zumindest 9,7 beträgt und höchstens 12° beträgt.

6.  Scheibe nach einem der vorstehenden Ansprüche, **dadurch gekennzeichnet, dass** ein Aussparungswinkel (β) zwischen

der dritten Geraden (g$_3$) und
einer vierten Geraden (g$_4$), die durch die Drehachse (D) und einen zweiten Schwerpunkt (S$_2$) der zweiten Ellipse (E$_2$) verläuft,

zumindest 8° beträgt und höchstens 12° beträgt.

7.  Scheibe nach einem der vorstehenden Ansprüche, **dadurch gekennzeichnet, dass** die Übertragungsstruktur (22) eine 60°-Drehsymmetrie aufweist.

8.  Scheibe nach einem der vorstehenden Ansprüche, **dadurch gekennzeichnet, dass** die Nabe (18)

    - eine Klemmbuchse oder einen Innenspannsatz (24) und/oder
    - eine Passfeder

aufweist.

9.  Scheibe nach einem der vorstehenden Ansprüche, **dadurch gekennzeichnet, dass** die Ausnehmung (34) zwischen

dem Innen-Bereich (36), in dem sie sich entlang der ersten Ellipse (E$_1$) erstreckt, und
einem radial außerhalb des Innen-Bereichs (36) liegenden Außen-Bereich einen Krümmungskreisradius hat, der

    höchstens dem minimalen Krümmungsradius der ersten Ellipse (E$_1$) entspricht und
    mindestens einem Drittel des minimalen Krümmungsradius der ersten Ellipse (E$_1$) entspricht.

10. Zugmitteltrieb mit

    (a) einer Scheibe (10), in Form eines Transmissionsrads, nach einem der vorstehenden Ansprüche und
    (b) einem Riemen (14), der mit dem Kranz (16) reibschlüssig verbunden ist.

**Claims**

1.  A sheave, especially a traction sheave, with

    (a) a hub (18),
    (b) a rim (16), which has an outer radius (R$_{16}$), and
    (c) a transmission structure (22) for transmitting a torque (M) from the hub (18) to the rim (16),
    (d) wherein the sheave (10) is designed to rotate about a rotational axis (D),
    (e) wherein the transmission structure (22)

        (i) features three bars (32.1, 32.2, 32.3),
        (ii) features a recess (34.1, 34.2, 34.3) between two adjacent bars (32.2, 32.3),
        (iii) each recess (34) extends in an inner region (36) along a first ellipse (E$_1$),
        (iv) each first ellipse (E$_1$) has a small first ellipse main axis (H$_1$), and
        (v) the small first ellipse main axis (H$_1$) extends through the hub (18), **characterised in that**

    (f) each of the bars

        (i) comprises an opening (42.1, 42.2, 42.3), which extends in the inner region (36) along a second ellipse (E$_2$),

(ii) each second ellipse ($E_2$) has a large second ellipse main axis ($H_2$), and
(iii) the large second ellipse main axis ($H_2$) extends through the hub (18).

2. The sheave according to claim 1, **characterised in that** the inner region (36) extends to 0.5 times the outer radius ($R_{16}$) of the rotational axis (D).

3. The sheave according to claim 1, **characterised in that**

   - the recesses (34.1, 34.2, 34.3) extend along a circle (K) adjacent to the rim (16), wherein a respective circle of curvature centre point lies on the rotational axis (D), and
   - the openings (42.1, 42.2, 42.3) extend along the circle (K) adjacent to the rim (16).

4. The sheave according to one of the preceding claims, **characterised in that** a recess angle ($\alpha$), which extends between

   a first straight line ($g_1$), which extends through the rotational axis (D) and a first centre of gravity ($S_1$) of the first ellipse ($E_1$), and
   a second straight line ($g_2$), which extends through the rotational axis (D) and is tangent to the first ellipse ($E_1$),

   is at least 40.4° and at most 42.1°.

5. The sheave according to one of the preceding claims, **characterised in that** an arm width angle ($\sigma$) between

   the second straight line ($g_2$) and
   a third straight line ($g_3$), which extends through the rotational axis (D) and is tangent to the second ellipse ($E_2$) adjacent to the second straight line ($g_2$),

   is at least 9,7 and at most 12°.

6. The sheave according to one of the preceding claims, **characterised in that** an opening angle ($\beta$) between

   the third straight line ($g_3$) and
   a fourth straight line ($g_4$), which extends through the rotational axis (D)
   and a second centre of gravity ($S_2$) of the second ellipse ($E_2$),

   is at least 8° and at most 12°.

7. The sheave according to one of the preceding claims, **characterised in that** the transmission structure (22) exhibits a 60° rotational symmetry.

8. The sheave according to one of the preceding claims, **characterised in that** the hub (18) comprises

   - a clamping sleeve or an inner clamping set (24) and/or
   - a feather key.

9. The sheave according to one of the preceding claims, **characterised in that** the recess (34), between the inner region (36), in which it extends along the first ellipse ($E_1$), and an outer region that lies radially outwards of the inner region (36), has a circle of curvature radius which

   corresponds at most to the minimum radius of curvature of the first ellipse ($E_1$) and
   corresponds to at least one third of the minimum radius of curvature of the first ellipse ($E_1$).

10. A belt drive with

    (a) a sheave (10), in the form of a transmission wheel, according to one of the preceding claims and
    (b) a belt (14) that is connected to the rim (16) by way of frictional locking.

**Revendications**

1. Poulie, en particulier poulie d'entraînement, comportant

   (a) un moyeu (18),
   (b) une couronne (16) ayant un rayon extérieur ($R_{16}$), et
   (c) une structure de transmission (22) pour transmettre un couple de rotation (M) du moyeu (18) à la couronne (16),
   (d) la poulie (10) étant réalisée pour tourner autour d'un axe de rotation (D),
   (e) la structure de transmission (22)

      (i) comprenant trois barrettes (32.1, 32.2, 32.3)
      (ii) comprenant un évidement respectif (34.1, 34.2, 34.3) entre deux barrettes adjacentes (32.2, 32.3),
      (iii) chaque évidement (34) s'étendant dans une zone intérieure (36) le long d'une première ellipse ($E_1$),
      (iv) chaque première ellipse ($E_1$) ayant un petit axe principal ($H_1$) ; et
      (v) le petit axe principal ($H_1$) de la première ellipse passant par le moyeu (18),

      **caractérisée en ce que**
      (f) chacune des barrettes

      (i) comprenant une échancrure (42.1, 42.2, 42.3) qui s'étend dans la zone intérieure (36) le long d'une deuxième ellipse ($E_2$),
      (ii) chaque deuxième ellipse ($E_2$) ayant un grand axe principal ($H_2$) ; et
      (iii) le grand axe principal ($H_2$) de la deuxième ellipse passant par le moyeu (18).

2. Poulie selon la revendication 1,
   **caractérisée en ce que** la zone intérieure (36) s'étend jusqu'à une distance égale à 0,5 fois le rayon extérieur ($R_{16}$) à partir de l'axe de rotation (D).

3. Poulie selon la revendication 1,
   **caractérisée en ce que**

   - les évidements (34.1, 34.2, 34.3) s'étendent le long d'un cercle (K) au voisinage de la couronne (16), un centre de courbure respectif du cercle se trouvant sur l'axe de rotation (D), et
   - les échancrures (42.1, 42.2, 42.3) s'étendent le long du cercle (K) au voisinage de la couronne (16).

4. Poulie selon l'une des revendications précédentes,
   **caractérisée en ce qu'**un angle ($\alpha$) de l'évidement, qui se situe entre une première ligne droite ($g_1$) passant par l'axe de rotation (D) et par un premier barycentre ($S_1$) de la première ellipse ($E_1$), et
   une deuxième ligne droite ($g_2$) passant par l'axe de rotation (D) et tangente à la première ellipse ($E_1$),
   est de 40,4° au minimum et de 42,1° au maximum.

5. Poulie selon l'une des revendications précédentes,
   **caractérisée en ce qu'**un angle ($\sigma$) de la largeur de bras entre la deuxième ligne droite ($g_2$) et
   une troisième ligne droite ($g_3$) passant par l'axe de rotation (D) et tangente à la deuxième ellipse ($E_2$) au voisinage de la deuxième ligne droite ($g_2$) est de 9,7° au minimum et de 12° au maximum.

6. Poulie selon l'une des revendications précédentes,
   **caractérisée en ce qu'**un angle ($\beta$) de l'échancrure entre la troisième ligne droite ($g_3$) et
   une quatrième ligne droite ($g_4$) passant par l'axe de rotation (D) et par un deuxième barycentre ($S_2$) de la deuxième ellipse ($E_2$),
   est de 8° au minimum et de 12° au maximum.

7. Poulie selon l'une des revendications précédentes,
   **caractérisée en ce que** la structure de transmission (22) présente une symétrie de rotation de 60°.

8. Poulie selon l'une des revendications précédentes,
   **caractérisée en ce que** le moyeu (18) comprend

- une douille de serrage ou un ensemble de serrage interne (24) et/ou
- une clavette ajustée.

9. Poulie selon l'une des revendications précédentes,
   **caractérisée en ce que** l'évidement (34) présente
   entre la zone intérieure (36) dans laquelle il s'étend le long de la première ellipse ($E_1$), et
   une zone extérieure située radialement à l'extérieur de la zone intérieure (36)
   un rayon de courbure de cercle qui correspond
   au maximum au rayon de courbure minimal de la première ellipse ($E_1$), et au minimum à un tiers du rayon de courbure minimal de la première ellipse ($E_1$).

10. Mécanisme à moyen de traction, comportant

    (a) une poulie (10), sous la forme d'une roue de transmission, selon l'une des revendications précédentes ; et
    (b) une courroie (14) qui est reliée par coopération de friction à la couronne (16).

Fig.1

Fig.2

Fig.3

Fig. 4b

Fig. 4a

Fig. 5

Fig. 6

Fig.7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2016160875 A1
- DE 8305932 U1
- DE 69807533 T2
- JP H04331857 A